# FASCICULE DE BREVET EUROPEEN

(11) **EP 3 231 190 B1**
(45) Date de publication et mention de la délivrance du brevet: **10.04.2019**
(21) Numéro de dépôt: 15807860.0
(22) Date de dépôt: 08.12.2015
(51) Int. Cl.: H04N 21/6405, H04L 12/18, H04L 29/12, H04L 29/06, H04N 21/63

(54) **PROCÉDÉ ET DISPOSITIFS PERMETTANT UNE TRANSMISSION D'UN FLUX DE DONNÉES SELON UN MODE DE TRANSMISSION MULTIPOINT**
VERFAHREN UND VORRICHTUNGEN ZUR ÜBERTRAGUNG EINES DATENSTROMS GEMÄSS EINEM PUNKT-MEHRPUNKT-ÜBERTRAGUNGSMODUS
METHOD AND DEVICES FOR TRANSMITTING A DATA STREAM ACCORDING TO A MULTIPOINT TRANSMISSION MODE

(30) Priorité: 11.12.2014 FR 1462282
(43) Date de publication de la demande: 18.10.2017
(73) Titulaire: Sagemcom Broadband SAS, 92500 Rueil-Malmaison (FR)
(72) Inventeur: ROCQUELAY, Antonie, 92500 Rueil Malmaison (FR); ALARCON, Laurent, 92500 Rueil Malmaison (FR)
(74) Mandataire: Cabinet Le Guen Maillet
(86) Numéro de dépôt international: PCT/EP2015/078977
(87) Numéro de publication internationale: WO 2016/091874

(56) Documents cités:
- EP-A1- 2 611 067
- US-A1- 2013 219 423
- US-A1- 2014 211 681
- MORTEN LINDEBERG ET AL: "Challenges and techniques for video streaming over mobile ad hoc networks", MULTIMEDIA SYSTEMS, SPRINGER, BERLIN, DE, vol. 17, no. 1, 13 mai 2010 (2010-05-13), pages 51-82, XP019878924, ISSN: 1432-1882, DOI: 10.1007/S00530-010-0187-8
- MILITANO LEONARDO ET AL: "Multicast service delivery solutions in LTE-Advanced systems", 2013 IEEE INTERNATIONAL CONFERENCE ON COMMUNICATIONS (ICC), IEEE, 9 juin 2013 (2013-06-09), pages 5954-5958, XP032522534, ISSN: 1550-3607, DOI: 10.1109/ICC.2013.6655551 [extrait le 2013-11-04]
- HABERMAN JHU APL J MARTIN NETZWERT AG B: "Multicast Router Discovery; rfc4286.txt", 20051201, 1 décembre 2005 (2005-12-01), XP015043213, ISSN: 0000-0003
- CAIN B ET AL: "Internet Group Management Protocol, Version 3; rfc3376.txt", 20021001, 1 octobre 2002 (2002-10-01), XP015009135, ISSN: 0000-0003 cité dans la demande
- RICHARD O AFOLABI ET AL: "Multicast Scheduling and Resource Allocation Algorithms for OFDMA-Based Systems: A Survey", IEEE COMMUNICATIONS SURVEYS AND TUTORIALS, INSTITUTE OF ELECTRICAL AND ELECTRONICS ENGINEERS, US, vol. 15, no. 1, 1 January 2013 (2013-01-01), pages 240-254, XP011493334, ISSN: 1553-877X, DOI: 10.1109/SURV.2012.013012.00074

## Description

La présente invention concerne un procédé de transmission d'un flux de données selon un mode de transmission multipoint entre un dispositif serveur et un dispositif client et un dispositif client et un dispositif serveur mettant en oeuvre ledit procédé. Le procédé tire bénéfice de l'existence de plusieurs interfaces réseaux reliant le dispositif client au dispositif serveur.

Il est connu des applications de transmission de données utilisant des modes de communication multipoint (« multicast » en terminologie anglo-saxonne). Les modes de communication multipoint sont utilisés essentiellement lorsqu'un dispositif serveur doit transmettre un même flux de données à une pluralité de dispositifs clients. Le mode de communication multipoint est notamment utilisé pour des applications de diffusion de programmes multimédia sur réseau tels que par exemple des applications de diffusion de programmes télévisés sur internet, de vidéos à la demande ou encore de programmes radiophoniques sur internet.

Un avantage du mode de communication multipoint est qu'il évite de dupliquer des données sur certaines portions d'un réseau de communication.

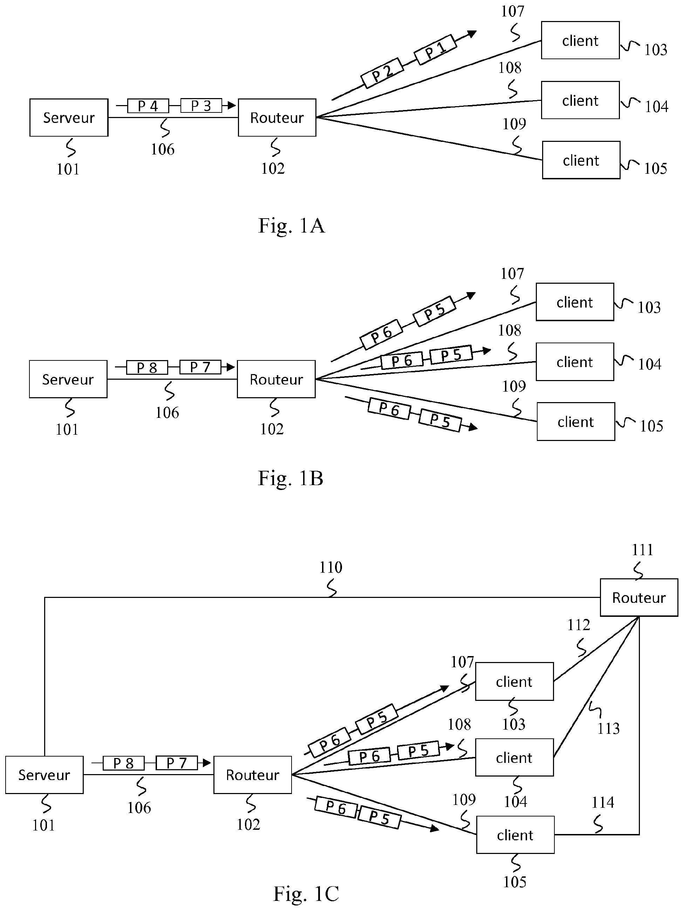

La **Fig. 1A** illustre schématiquement un premier exemple de mise en oeuvre d'un mode de communication multipoint entre un dispositif serveur (ou serveur) 101 et des dispositifs clients (ou clients) 103, 104 et 105. Dans l'exemple de la Fig. 1A, un lien de communication 106 relie le serveur 101 à un routeur 102. Des liens de communication 107, 108 et 109 relient respectivement le routeur 102 aux clients 103, 104 et 105. Les liens de communication 107 (respectivement 108 et 109) et 106 forment un chemin de communication 106/107 (respectivement 106/108 et 106/109) entre le serveur 101 et le client 103 (respectivement le client 104 et le client 105). En utilisant le chemin 106/107 (respectivement le chemin 106/108 et le chemin 106/109) le client 103 (respectivement le client 104 et le client 105) possède donc une interface réseau le reliant au dispositif serveur 101.

Chaque client 103, 104 et 105 peut être un client final tel qu'un dispositif multimédia apte à utiliser un flux de données transmis par le serveur 101. Un dispositif multimédia peut par exemple être un ordinateur, une tablette tactile, un téléphone intelligent, un téléviseur, un décodeur de programme télévisuel numérique. Chaque client 103, 104 et 105 peut aussi être un client intermédiaire entre un client final et le serveur 101. Un client intermédiaire peut par exemple être une passerelle internet (Gateway en terminologie anglo-saxonne) qui retransmet des flux multimédias dans un réseau local (Local Area Network (LAN) en terminologie anglo-saxonne) à des dispositifs client finaux.

Le mode de communication multipoint nécessite qu'un client souhaitant recevoir un flux de données transmis sur un groupe multipoint, s'abonne au groupe multipoint. La gestion des abonnements à un groupe multipoint nécessite un échange de requête de gestion de groupes multipoints entre chaque serveur, routeur et client impliqués dans un groupe multipoint. Cette gestion des abonnements est classiquement mise en oeuvre par le protocole IGMP (Protocole de gestion de groupes internet, « Internet Group Management Protocol », en terminologie anglo-saxonne, décrit successivement dans les RFC 988 (version 0), 1112 (version 1), 2236 (version 2), 3376 (version 3)).

Dans l'exemple de la Fig. 1A, seul le client 103 est abonné à un groupe multipoint, dit groupe multipoint cible. Pour ce faire le client 103 a transmis une requête d'abonnement IGMP au routeur 102 pour informer le routeur 102 que le client 103 souhaite s'abonner au groupe multipoint cible. Si aucun autre client connecté au routeur 102 n'est abonné audit groupe multipoint cible, le routeur 102 transmet une requête d'abonnement IGMP au serveur 101 pour l'avertir qu'un client souhaite recevoir le flux de données correspondant audit groupe multipoint cible. De cette manière, une transmission du flux de données correspondant audit groupe multipoint cible est activée. Tant que l'abonnement n'est pas effectif, aucun paquet de données correspondant au flux de données ne transite entre le serveur 101 et le client 103. Dès que l'abonnement est effectif, des paquets de données P1, P2, P3, P4 transitent sur le chemin 106/107.

La Fig. 1B illustre schématiquement un second exemple de mise en oeuvre d'un mode de communication multipoint entre le dispositif serveur 101 et les dispositifs clients 103, 104 et 105. Dans cet exemple, les clients 104 et 105 s'abonnent au même groupe multipoint que le client 103. Pour ce faire, ils transmettent chacun une requête d'abonnement IGMP au routeur 102 pour lui indiquer qu'ils souhaitent s'abonner audit groupe multipoint cible. Puisque dans ce cas, le client 103 était déjà abonné au groupe multipoint cible, le routeur 102 n'a pas à transmettre de requêtes d'abonnement IGMP au serveur 101 suite à la réception des requêtes d'abonnement IGMP provenant des clients 104 et 105. L'exemple de la Fig. 1B illustre un avantage du mode de communication multipoint. Bien que trois clients soient abonnés, les paquets P7 et P8 ne sont pas dupliqués sur le lien 106, le lien 106 étant un lien commun entre les chemins de communication 106/107, 106/108 et 106/109. Ce n'est qu'après le routeur 102, sur les liens 107, 108 et 109, non communs entre les chemins de communication 106/107, 106/108 et 106/109, que les paquets sont dupliqués, les paquets ayant été dupliqués par le routeur 102. De cette manière, la partie de chaque chemin de communication commune à tous les chemins n'est pas surchargée par de multiples copies de chaque paquet.

Par la suite, lorsque nous parlons de requêtes d'abonnement et de requêtes de désabonnement, ces requêtes correspondent à des requêtes d'abonnement IGMP et de désabonnement IGMP telles que définies par le protocole IGMP.

La **Fig. 1C** illustre schématiquement une limitation d'un mode de communication multipoint lorsqu'un dispositif client possède plusieurs interfaces réseaux reliant le dispositif client à un dispositif serveur. Dans cet exemple, chaque client 103, 104 et 105 possède deux interfaces réseaux le reliant au serveur 101. Le client 103 (respectivement 104 et 105) possède une première interface le reliant au serveur 101 par le chemin 106/107 (respectivement 106/108 et 106/109) et une seconde interface réseau le reliant au serveur 101 par un chemin 110/112 (respectivement 110/113 et 110/114) comprenant des liens 110 et 112 (respectivement des liens 110 et 113 et des liens 110 et 114) et traversant un routeur 111. Le mode de communication multipoint, tel que défini actuellement, ne permet pas à un client de bénéficier de la présence de plusieurs interfaces de communication. En effet, une communication multipoint ne peut utiliser qu'un chemin de communication pour transmettre un flux de données. Par exemple, en cas d'abonnement à un groupe multipoint, le client ne peut recevoir le flux de données correspondant au groupe multipoint que sur le chemin 106/107 ou sur le chemin 110/112. Sachant que chaque chemin de communication est associé à une bande passante, une utilisation combinée des deux chemins 106/107 et 110/112 aurait pu permettre d'accroître une bande passante de réception du client 103.

Le document EP2611067 décrit un système et une méthode permettant de combiner plusieurs liens de communication.

Le document « Morten Lindeberg et Al., Challendes and techniques for video streaming over mobile ad hoc networks, Multimedia systems, springer, Berlin, DE, Vol. 17, No. 1, 13 mai 2010 » divulgue des méthodes permettant de diviser un flux de données en plusieurs sous-flux de données et de transmettre chacun des sous-flux sur des chemins différents.

Le document US2014211681 décrit une transmission d'un contenu en au moins deux sous-flux, l'un multipoint, par exemple via une interface Wi-Fi, et l'autre point à point via une interface 3G/4G.

Il est souhaitable de pallier ces différents inconvénients de l'état de la technique.

Il est notamment souhaitable de permettre à un client, s'abonnant à un groupe multipoint pour obtenir un flux de données de la part d'un serveur, de bénéficier de l'ensemble des interfaces réseaux le reliant au serveur à sa disposition.

Il est notamment souhaitable de fournir une solution qui soit simple à mettre en oeuvre et à faible coût.

Selon un premier aspect de la présente invention, la présente invention concerne un procédé de transmission d'un flux de données selon un mode de transmission multipoint entre un dispositif serveur et un dispositif client, le procédé comprenant les étapes suivantes mises en oeuvre par le dispositif client : obtenir une première requête d'abonnement à un groupe multipoint, dit groupe multipoint cible, permettant d'obtenir un flux de données ; remplacer la première requête d'abonnement au groupe multipoint cible par une pluralité de secondes requêtes d'abonnement, chaque seconde requête d'abonnement étant associée à un sous-groupe multipoint d'un ensemble de sous-groupes multipoints, chaque sous-groupe multipoint permettant d'obtenir un sous-flux de données formant une sous-partie du flux de données, l'ensemble des sous-groupes multipoints permettant d'obtenir ledit flux de données en combinant les sous-flux de données; associer une interface réseau à chaque seconde requête d'abonnement, chaque interface réseau associée étant prise dans un ensemble d'interfaces réseaux, reliant le dispositif serveur au dispositif client, disponibles sur le dispositif client ; transmettre chaque seconde requête d'abonnement en direction du dispositif serveur sur l'interface réseau qui a été associée à ladite seconde requête ; recevoir des sous-flux de données correspondant aux secondes d'abonnement transmises, chaque sous-flux de données reçu étant reçu sur l'interface réseau sur laquelle a été transmise la seconde requête d'abonnement associée audit sous-flux de données ; reconstruire le flux de données en utilisant les sous-flux de données reçus afin de permettre une utilisation dudit flux de données.

L'invention permet donc de bénéficier de l'ensemble des interfaces réseaux disponibles sur un client. Les données d'un flux de données correspondant à un groupe multipoint, sont réparties dans un ensemble de sous-flux de données, chaque sous-flux de données correspondant à un sous-groupe multipoint. Le client peut alors s'abonner aux sous-groupes multipoints à partir de différentes interfaces réseaux et recevoir les sous-flux de données sur lesdites interfaces réseaux. Une réception des flux de données sur une pluralité d'interfaces réseaux permet de cumuler des bandes passantes disponibles sur les différentes interfaces réseaux.

Selon un mode de réalisation, suite à l'obtention de la première requête d'abonnement au groupe multipoint cible, le dispositif client recherche une information représentative dudit groupe multipoint cible dans un ensemble d'informations représentatives de groupes multipoints, la première requête d'abonnement étant remplacée par les secondes requêtes d'abonnement lorsque l'information représentative dudit groupe multipoint cible est retrouvée dans l'ensemble d'informations représentatives de groupes multipoints.

Selon un mode de réalisation, lors de la recherche de l'information représentative dudit groupe multipoint cible dans l'ensemble d'informations représentatives de groupes multipoints, le dispositif client met en oeuvre les étapes suivantes : envoyer en direction du dispositif serveur une requête, dite requête GETCAPS, demandant des informations représentatives de chaque flux de données pouvant être délivré par ledit dispositif serveur ; recevoir de la part du dispositif serveur au moins une requête, dite requête SENDCAPS, fournissant une information représentative de chaque flux de données pouvant être délivré par ledit dispositif serveur ; construire l'ensemble d'informations représentatives de groupes multipoints à partir des informations représentatives de flux de données reçues ; rechercher l'information représentative dudit groupe multipoint cible dans l'ensemble d'informations représentatives de groupes multipoints ainsi construit.

De cette manière, lorsqu'un dispositif client ne possède aucune information sur les flux de données disponibles sur des groupes multipoints, il peut interroger les dispositifs serveurs pour obtenir ces informations.

Selon un mode de réalisation, l'information représentative de chaque flux de données comprend une information représentative d'une adresse multipoint dudit flux de données et une information représentative d'un ensemble de sous-flux de données correspondant audit flux de données et, pour chaque sous-flux de données, une information représentative d'une adresse multipoint dudit sous-flux de données.

Selon un mode de réalisation, l'information représentative de chaque flux de données comprend en outre, une information représentative du débit de chaque flux de données et de chaque sous-flux de données.

Selon un mode de réalisation, chaque requête GETCAPS et chaque requête SENDCAPS est compatible avec un protocole de gestion de groupe internet (IGMP).

Selon un mode de réalisation, lors de la réception des sous-flux de données correspondant aux secondes requêtes d'abonnement transmises, le dispositif client vérifie que pour chaque seconde requête d'abonnement transmise, le sous-flux de données correspondant au sous-groupe multipoint associé à ladite seconde requête d'abonnement est reçu, et reconstruit ledit flux de données si chaque sous-flux de données est reçu.

Selon un mode de réalisation, lorsqu'au moins un sous-flux de données n'est pas reçu, le dispositif client transmet, en direction du dispositif serveur, une requête de désabonnement pour chaque sous-groupe multipoint pour lequel une seconde requête d'abonnement a été transmise.

Selon un mode de réalisation, lorsque l'information représentative dudit groupe multipoint n'est pas retrouvée dans l'ensemble d'informations représentatives de groupes multipoints, le dispositif client transmet la première requête d'abonnement en direction du dispositif serveur de sorte à recevoir le flux de données.

Selon un mode de réalisation, lorsque pendant la réception des sous-flux de données correspondant aux secondes requêtes d'abonnement transmises, le dispositif client détecte une ouverture d'une nouvelle interface réseau reliant le dispositif client au dispositif serveur, le dispositif client met en oeuvre les étapes suivantes : enrichir ledit ensemble d'interfaces réseaux en y ajoutant la nouvelle interface réseau détectée; associer la nouvelle interface réseau avec au moins une seconde requête d'abonnement à un sous-groupe multipoint de l'ensemble de sous-groupes multipoints correspondant au groupe multipoint cible ; transmettre, en direction du dispositif serveur, chaque seconde requête d'abonnement associée à la nouvelle interface réseau en utilisant la nouvelle interface réseau ; lorsqu'un sous-flux de données, dit sous-flux dupliqué, correspondant à un sous-groupe multipoint, associé à une seconde requête d'abonnement transmise sur la nouvelle interface réseau, est reçu simultanément sur une pluralité d'interfaces réseaux comprenant la nouvelle interface réseau, transmettre une requête de désabonnement pour chaque sous-groupe multipoint correspondant à un sous-flux dupliqué reçu sur une autre interface réseau que la nouvelle interface réseau.

Selon un mode de réalisation, lorsqu'un sous-flux de données correspondant à un sous-groupe multipoint, associé à une seconde requête d'abonnement transmise sur la nouvelle interface réseau, n'est pas reçu sur la nouvelle interface réseau, le dispositif client transmet, en direction du dispositif serveur, une requête de désabonnement pour le sous-groupe multipoint correspondant au sous-flux de données non reçu.

Selon un mode de réalisation, lorsque pendant la réception des sous-flux de données correspondant aux secondes requêtes d'abonnement transmises, le dispositif client détecte une suppression d'une interface réseau reliant le dispositif client au dispositif serveur, le dispositif client met en oeuvre les étapes suivantes : réduire ledit ensemble d'interfaces réseaux en retirant l'interface réseau supprimée; associer chaque seconde requête d'abonnement préalablement associée à l'interface réseau supprimée à une interface réseau de l'ensemble d'interface réseau réduit ; transmettre, en direction du dispositif serveur, chaque seconde requête d'abonnement préalablement associée à l'interface réseau supprimée en utilisant l'interface réseau de l'ensemble d'interface réseau réduit avec laquelle elle est associée ; reconstruire le flux multipoint si, suite à la transmission de chaque seconde requête d'abonnement préalablement associée à l'interface réseau supprimée, chaque sous-flux de données correspondant à chaque seconde requête d'abonnement transmise est reçu.

Selon un mode de réalisation, si, suite à la transmission de chaque seconde requête d'abonnement préalablement associée à l'interface réseau supprimée, au moins un sous-flux de données correspondant à une seconde requête d'abonnement transmise n'est pas reçu, le dispositif client transmet en direction du dispositif serveur une requête de désabonnement pour chaque sous-groupe multipoint.

Selon un mode de réalisation, le procédé comprend les étapes suivantes mises en oeuvre par le dispositif serveur : recevoir chaque seconde requête d'abonnement sur une interface de réception ; répartir les données du flux de données dans les sous-flux de données ; transmettre chaque sous-flux de données sur une interface réseau correspondant à l'interface de réception de la seconde requête d'abonnement associée au sous-groupe multipoint correspondant audit sous-flux de données.

Selon un mode de réalisation, la répartition des données du flux de données dans les sous-flux de données se fait en prenant en compte l'information représentative du débit de chaque flux de données et/ou de chaque sous-flux de données.

Selon un deuxième aspect de la présente invention, la présente invention concerne un dispositif client apte à recevoir un flux de données selon un mode de transmission multipoint de la part d'un dispositif serveur comprenant les moyens suivants: des moyens d'obtention pour obtenir une première requête d'abonnement à un groupe multipoint, dit groupe multipoint cible, permettant d'obtenir un flux de données ; des moyens de remplacement pour remplacer la première requête d'abonnement au groupe multipoint cible par une pluralité de secondes requêtes d'abonnement, chaque seconde requête d'abonnement étant associée à un sous-groupe multipoint d'un ensemble de sous-groupes multipoints, chaque sous-groupe multipoint permettant d'obtenir un sous-flux de données formant une sous-partie du flux de données, l'ensemble des sous-groupes multipoints permettant d'obtenir ledit flux de données en combinant les sous-flux de données; des moyens d'association pour associer une interface réseau à chaque seconde requête d'abonnement, chaque interface réseau associée étant prise dans un ensemble d'interfaces réseaux, reliant le dispositif client au dispositif serveur, disponibles sur le dispositif client ; des moyens de transmission pour transmettre chaque seconde requête d'abonnement au dispositif serveur sur l'interface réseau qui lui a été associée ; des moyens de réception pour recevoir des sous-flux de données correspondant aux secondes requêtes d'abonnement transmises, chaque sous-flux de données reçu étant reçu sur l'interface réseau sur laquelle a été transmise la seconde requête d'abonnement associée audit sous-flux de données ; des moyens de reconstruction pour reconstruire le flux de données en utilisant les sous-flux de données reçus afin de permettre une utilisation dudit flux de données.

Selon un troisième aspect de la présente invention, l'invention concerne un système de communication comprenant un dispositif serveur et au moins un dispositif client selon le deuxième aspect.

Selon un quatrième aspect de la présente invention, la présente invention concerne un programme d'ordinateur, comprenant des instructions pour mettre en oeuvre, par un dispositif client ou un dispositif serveur, le procédé selon le premier aspect, lorsque ledit programme est exécuté par un processeur dudit dispositif serveur ou dudit dispositif client.

Selon un cinquième aspect de la présente invention, la présente invention concerne des moyens de stockage, stockant un programme d'ordinateur comprenant des instructions pour mettre en oeuvre, par un dispositif client ou un dispositif serveur, le procédé selon un premier aspect, lorsque ledit programme est exécuté par un processeur dudit dispositif serveur ou dudit dispositif client.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un premier exemple de mise en oeuvre d'un mode de communication multipoint entre un dispositif serveur et un dispositif client ;
- la Fig. 1B illustre schématiquement un second exemple de mise en oeuvre d'un mode de communication multipoint entre un dispositif serveur et des dispositifs clients ;
- la Fig. 1C illustre schématiquement une limitation d'un mode de communication multipoint lorsqu'un dispositif client possède plusieurs interfaces réseaux reliant le dispositif client à un dispositif serveur ;
- la Fig. 1D illustre schématiquement une mise en oeuvre de l'invention lorsqu'un dispositif client possède plusieurs interfaces réseaux reliant le dispositif client à un dispositif serveur ;
- la Fig. 2A illustre schématiquement un exemple d'architecture matérielle d'un dispositif client mettant en oeuvre l'invention ;
- la Fig. 2B illustre schématiquement un exemple d'architecture matérielle d'un dispositif serveur mettant en oeuvre l'invention ;
- la Fig. 3 illustre schématiquement un premier exemple de procédé mis en oeuvre par un dispositif client, permettant de tirer bénéfice d'une pluralité d'interfaces réseaux reliant le dispositif client à un dispositif serveur, dans le cadre d'une communication multipoint ;
- la Fig. 4 illustre schématiquement un deuxième exemple de procédé mis en oeuvre par un dispositif client, permettant de tirer bénéfice d'une pluralité d'interfaces réseaux reliant le dispositif client à un dispositif serveur, dans le cadre d'une communication multipoint ;
- la Fig. 5 illustre schématiquement un exemple de procédé mis en oeuvre par un dispositif client lors d'une apparition d'une nouvelle interface réseau reliant le dispositif client à un dispositif serveur;
- la Fig. 6 illustre schématiquement un exemple de procédé mis en oeuvre par un dispositif client lors d'une disparition d'une interface réseau existante reliant le dispositif client à un dispositif serveur;
- la Fig. 7 illustre schématiquement un procédé mis en oeuvre par un dispositif serveur, permettant de transmettre des sous-flux multipoints correspondant à un flux multipoint à au moins un dispositif client ;
- la Fig. 8 illustre schématiquement un exemple de procédé mis en oeuvre par un dispositif client, permettant de rechercher une information représentative d'un groupe multipoint dans un ensemble d'informations représentatives de groupes multipoints ;
- la Fig. 9 illustre schématiquement un exemple de requête permettant d'obtenir une description des groupes multipoints que peut fournir un serveur;
- la Fig. 10 illustre schématiquement un exemple de requête permettant à un dispositif serveur de fournir une information représentative de chaque flux de données pouvant être délivré par ledit dispositif serveur dans un groupe multipoint correspondant ; et,
- les Figs. 11, 12 et 13 illustrent schématiquement des exemples d'options de la requête permettant à un dispositif serveur de fournir une information représentative de chaque flux de données pouvant être délivré par ledit dispositif serveur dans un groupe multipoint correspondant.

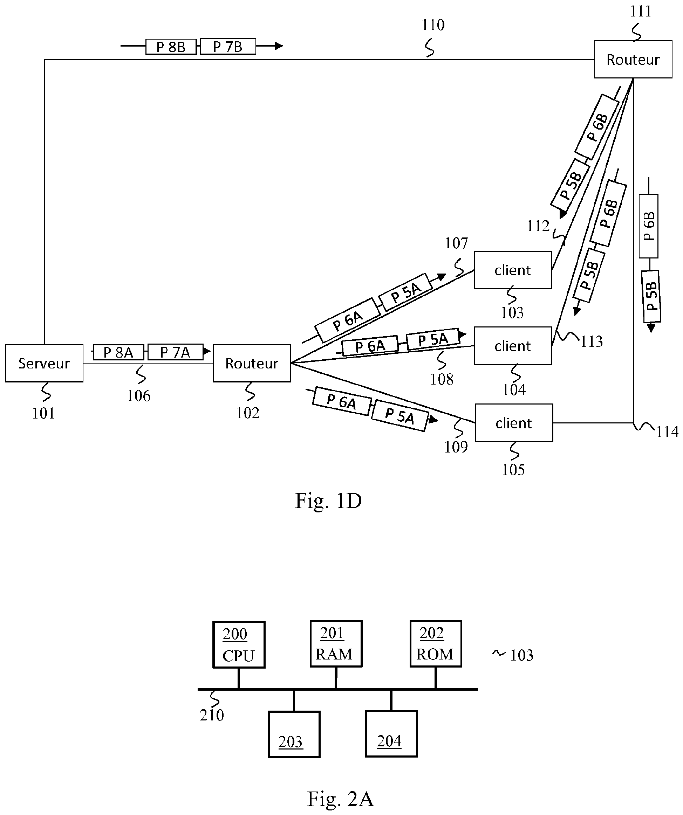

La **Fig. 1D** illustre schématiquement une mise en oeuvre de l'invention lorsque les dispositifs clients 103, 104 et 105 possèdent plusieurs interfaces réseaux reliant chaque dispositif client 103, 104 et 105 au dispositif serveur 101. Cet exemple reprend la situation de la Fig. 1C dans laquelle chaque client 103, 104 et 105 possède deux interfaces réseaux le reliant au serveur 101. Nous supposons ici que chaque client 103, 104 et 105 est une passerelle internet, chaque passerelle internet ayant reçu d'un client final situé dans son réseau local, une première requête d'abonnement à un même groupe multipoint, dit groupe multipoint cible, permettant d'obtenir un flux de données. Dans le cadre de l'invention, selon un procédé que nous décrivons pas la suite, chaque client 103, 104 et 105 remplace la première requête d'abonnement à un groupe multipoint cible par deux secondes requêtes d'abonnement. Chaque seconde requête d'abonnement est associée à un sous-groupe multipoint d'un ensemble de sous-groupes multipoints. Chaque sous-groupe multipoint permet d'obtenir un sous-flux de données formant une sous-partie du flux de données, l'ensemble des sous-groupes multipoints permettant d'obtenir ledit flux de données en combinant les sous-flux de données. Chaque client 103, 104 et 105 transmet ensuite une première seconde requête d'abonnement sur une première interface réseau (par exemple sur les chemins de communication 106/107, 106/108 et 106/109) et une deuxième seconde requête d'abonnement sur une deuxième interface réseau (par exemple sur les chemins de communication 110/112, 110/113, 110/114). Lorsqu'ils reçoivent les secondes requêtes d'abonnement, si aucun client connecté aux routeurs 102 et 111 n'était déjà abonné à l'un des sous-groupes, les routeurs 102 et 111 transmettent chacun au serveur 101, une seconde requête d'abonnement correspondant aux secondes requêtes d'abonnement qu'ils ont reçues. Suite à la réception de ces secondes requêtes d'abonnement, le serveur 101 commence une transmission d'un premier sous-flux de données en direction de la première interface réseau des clients 103, 104 et 105 et d'un deuxième sous-flux de données en direction de la deuxième interface réseau des clients 103, 104 et 105. Chaque client 103, 104 et 105 reconstruit ensuite le flux de données à partir des sous-flux de données qu'il reçoit et retransmet le flux de données reconstruit à son client final respectif situé dans son réseau local. Chaque client 103, 104 et 105 bénéficie donc de l'utilisation de chacune des interfaces réseaux dont il dispose. Par exemple, le client 103 bénéficie d'un cumul des bandes passantes des chemins 106/107 et 110/112 pour recevoir le flux de données.

Par la suite l'invention est décrite dans le cadre d'une transmission multipoint entre un serveur et un client, où le client est une passerelle internet recevant une requête d'abonnement à un groupe multipoint d'un client final situé dans le réseau local de la passerelle internet. L'invention peut toutefois être mise en oeuvre de la même manière dans un client final, tel qu'un ordinateur, un téléphone portable intelligeant, une tablette tactile, etc. Dans ce dernier cas, le client final ne transmet pas une première requête d'abonnement à un groupe multipoint à un client intermédiaire qui remplace cette première requête d'abonnement par une pluralité de secondes requêtes d'abonnement, mais remplace lui-même la première requête d'abonnement en une pluralité de secondes requêtes d'abonnement.

Par ailleurs nous considérons ici des applications de transmission en mode multipoint de flux de données télévisuelles. D'autres flux de données peuvent toutefois être envisagés tels que, par exemple, des flux de données radiophoniques.

La **Fig. 2A** illustre schématiquement un exemple d'architecture matérielle d'un dispositif client mettant en oeuvre l'invention. Nous prenons ici l'exemple du client 103. Le client 103 comprend alors, reliés par un bus de communication 210 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un lecteur de cartes SD (« Secure Digital » en anglais) 203 ; un ensemble 204 d'interfaces de connexion permettant de connecter le client 103 à un ou plusieurs réseaux étendus (WAN, « Wide Area Network » en terminologie anglo-saxonne) comme par exemple le réseau internet, pour communiquer, par exemple, avec le serveur 101, ou à un réseau local pour communiquer par exemple avec un client final.

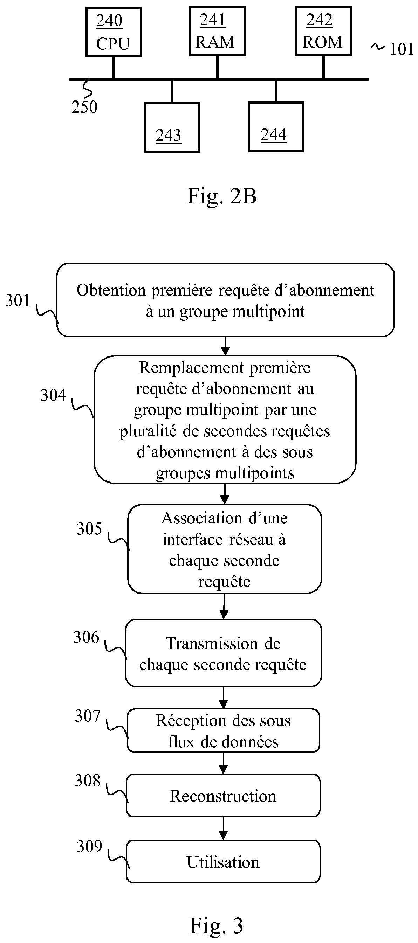

Le processeur 200 est capable d'exécuter des instructions chargées dans la RAM 201 à partir de la ROM 202, d'une mémoire externe (non représentée), d'un support de stockage, tel qu'une carte SD, ou d'un réseau de communication. Lorsque le client 103 est mis sous tension, le processeur 200 est capable de lire de la RAM 201 des instructions et de les exécuter. Ces instructions forment un programme d'ordinateur causant la mise en oeuvre, par le processeur 200, de tout ou partie des procédés décrits ci-après en relation avec les Figs. 3, 4, 5, 6 et 8.

La **Fig. 2B** illustre schématiquement un exemple d'architecture matérielle d'un dispositif serveur mettant en oeuvre l'invention. Nous prenons ici l'exemple du serveur 101. Le serveur 101 comprend alors, reliés par un bus de communication 250 : un processeur ou CPU (« Central Processing Unit » en anglais) 240 ; une mémoire vive RAM (« Random Access Memory » en anglais) 241 ; une mémoire morte ROM (« Read Only Memory » en anglais) 242 ; une unité de stockage ou un lecteur de support de stockage, tel qu'un lecteur de cartes SD (« Secure Digital » en anglais) 243 ; un ensemble 244 d'interfaces de connexion permettant de connecter le serveur 101 à un ou plusieurs réseaux étendus (WAN) pour communiquer, par exemple, avec les clients 103, 104 et 105.

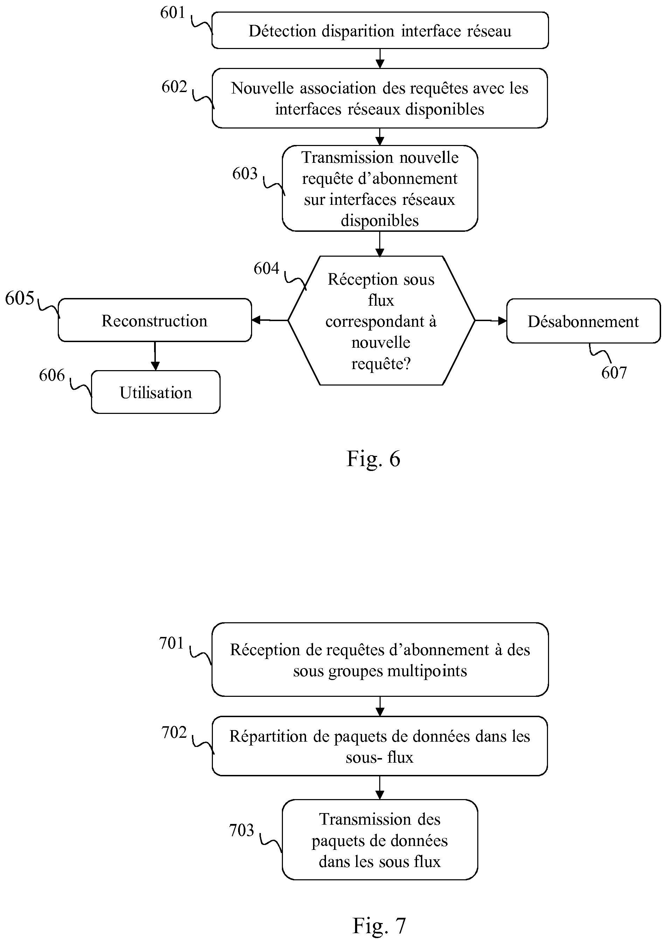

Le processeur 250 est capable d'exécuter des instructions chargées dans la RAM 241 à partir de la ROM 242, d'une mémoire externe (non représentée), d'un support de stockage, tel qu'une carte SD, ou d'un réseau de communication. Lorsque le serveur 101 est mis sous tension, le processeur 240 est capable de lire de la RAM 241 des instructions et de les exécuter. Ces instructions forment un programme d'ordinateur causant la mise en oeuvre, par le processeur 240, de tout ou partie des procédés décrits ci-après en relation avec la Fig. 7.

Tout ou partie de l'algorithme décrit ci-après en relation avec les Figs. 3, 4, 5, 6, 7, 8 peut être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La **Fig. 3** illustre schématiquement un premier exemple de procédé mis en oeuvre par un dispositif client, permettant de tirer bénéfice d'une pluralité d'interfaces réseaux reliant le dispositif client à un dispositif serveur, dans le cadre d'une communication multipoint. Nous reprenons ici l'exemple décrit en relation avec la Fig. 1D, le serveur étant le serveur 101 et le client étant le client 103.

Dans une étape 301, le client 103 obtient une première requête d'abonnement à un groupe multipoint, dit groupe multipoint cible, permettant d'obtenir un flux de données. Cette requête d'abonnement a par exemple été transmise au client 103 par un client final connecté au réseau local du client 103. Dans l'exemple de la Fig. 3, la requête d'abonnement au groupe multipoint cible a pour objectif d'abonner le client final à un groupe multipoint permettant de recevoir un flux de données télévisuelles correspondant à une chaîne de télévision.

Dans une étape 304, le client 103 remplace la première requête d'abonnement au groupe multipoint cible par une pluralité de secondes requêtes d'abonnement. Chaque seconde requête d'abonnement est associée à un sous-groupe multipoint d'un ensemble de sous-groupes multipoints. Chaque sous-groupe multipoint permet d'obtenir un sous-flux de données formant une sous-partie du flux de données, l'ensemble des sous-groupes multipoints permettant d'obtenir ledit flux de données en combinant les sous-flux de données. Dans l'exemple de la Fig. 3, on suppose que le client 103 possède une description de tous les groupes multipoints auxquels pourrait s'abonner un client final compris dans son réseau local. Cette description met en correspondance chaque adresse d'un groupe multipoint avec une pluralité d'adresses de sous-groupes multipoints. Chaque pluralité d'adresses de sous-groupes multipoints permet de s'abonner à des sous-groupes multipoints permettant d'obtenir des sous-flux de données qui, en les combinant, permettent de reconstruire le flux de données qui aurait été obtenu en s'abonnant au groupe multipoint cible.

Dans une étape 305, le client 103 associe une interface réseau à chaque seconde requête d'abonnement. Dans un mode de réalisation, le client 103 possède un ensemble d'interfaces réseaux comprenant un nombre d'interfaces réseaux suffisant pour que chaque seconde requête d'abonnement soit associée à une interface réseau différente.

Dans une étape 306, le client 103 transmet chaque seconde requête d'abonnement en direction du serveur 101 sur l'interface réseau qui a été associée à ladite seconde requête. En transmettant une seconde requête d'abonnement sur une interface réseau donnée, on s'assure que le sous-flux de données correspondant à cette seconde requête d'abonnement sera reçu sur cette interface réseau donnée.

Dans une étape 307, le client 103 reçoit des sous-flux de données correspondant aux secondes requêtes d'abonnement transmises, chaque sous-flux de données reçu étant reçu sur l'interface réseau sur laquelle a été transmise la seconde requête d'abonnement associée audit sous-flux de données. Dans une mode de réalisation, tous les sous-flux de données pour lesquels une seconde requête d'abonnement a été transmise, sont systématiquement reçus.

Dans une étape 308, le client 103 reconstruit le flux de données à partir des sous-flux de données reçus. Dans un mode de réalisation, lors de sa transmission, chaque sous-flux de données a été encapsulé dans des paquets de données comprenant chacun une information de numéro de séquence et un indicateur temporel, comme par exemple des paquets compatibles avec le protocole RTP (protocole de transport temps réel, « Real time Transport Protocol » en terminologie anglo-saxonne, RFC 1889). L'utilisation de paquets comportant une information de numéro de séquence et un indicateur temporel permet de réordonner les paquets de données de chaque sous-flux de données reçu pour reconstruire le flux de données.

Lors d'une étape 309, le client 103 transmet le flux de données au client final, qui l'utilise. Dans le cas d'une application de transmission de données télévisuelles, le client final décode le flux de données télévisuelles pour afficher une chaîne de télévision.

Dans un mode de réalisation, la description de tous les groupes multipoints auxquels pourrait s'abonner un client final compris dans le réseau local du client 103 comprend pour chaque flux de données, une information représentative du débit du flux de données, et pour chaque sous-flux de données, une information du débit du sous-flux de données. Par ailleurs, le client 103 est capable d'estimer une bande passante disponible sur chaque interface réseau qu'il possède. Dans ce mode de réalisation, lors de l'étape 304, avant d'effectuer le remplacement de la première requête d'abonnement par les secondes requêtes d'abonnement, le client 103 compare le débit du flux de données correspondant au groupe multipoint cible avec une somme des bandes passantes disponibles sur les interfaces réseaux disponibles sur le client 103. Le remplacement n'est effectué que si le débit du flux de données est inférieur ou égal à la somme des bandes passantes. Si le débit du flux de données est supérieur à la somme des bandes passantes, l'abonnement au groupe multipoint est abandonné et les étapes 305 à 309 ne sont pas mises en oeuvre par le client 103.

Si le débit du flux de données est inférieur à la somme des bandes passantes, lors de l'étape 305, avant d'associer une seconde requête d'abonnement à une interface réseau, le client 103 vérifie qu'une somme cumulée des débits des sous-flux correspondant aux secondes requêtes d'abonnement associées à ladite interface est inférieure à la bande passante disponible sur ladite interface réseau. Si au moins une des secondes requêtes d'abonnement ne peut être associée à l'une des interfaces réseaux disponibles sur le client 103, le client 103 abandonne l'abonnement aux sous-groupes multipoints et ne met pas en oeuvre les étapes 306 à 309.

Dans un mode de réalisation, le client 103 possède un nombre d'interfaces réseaux inférieur à un nombre de sous-groupes multipoints compris dans l'ensemble de sous-groupes multipoints correspondant au groupe multipoint cible. Dans ce cas, certaines interfaces réseaux sont associées à plusieurs secondes requêtes d'abonnement.

Dans un mode de réalisation, certains sous-flux de données correspondant à des secondes requêtes d'abonnement transmises par le client 103 ne sont pas reçus. Dans ce cas, le client 103 reconstruit le flux de données à partir des sous-flux de données qu'il reçoit. Dans un mode de réalisation, le client 103 remplace des paquets de données des sous-flux qu'il n'a pas reçu par des paquets de données des flux qu'il a reçu les plus proches temporellement des paquets perdus. Dans un autre mode de réalisation, le client 103 n'essaye pas de remplacer les paquets de données des flux qu'il n'a pas reçus et considère que chaque perte de données correspondant à ces paquets de données peut être masquée par le client final en employant des méthodes de masquage d'erreurs (« error concealment » en terminologie anglo-saxonne).

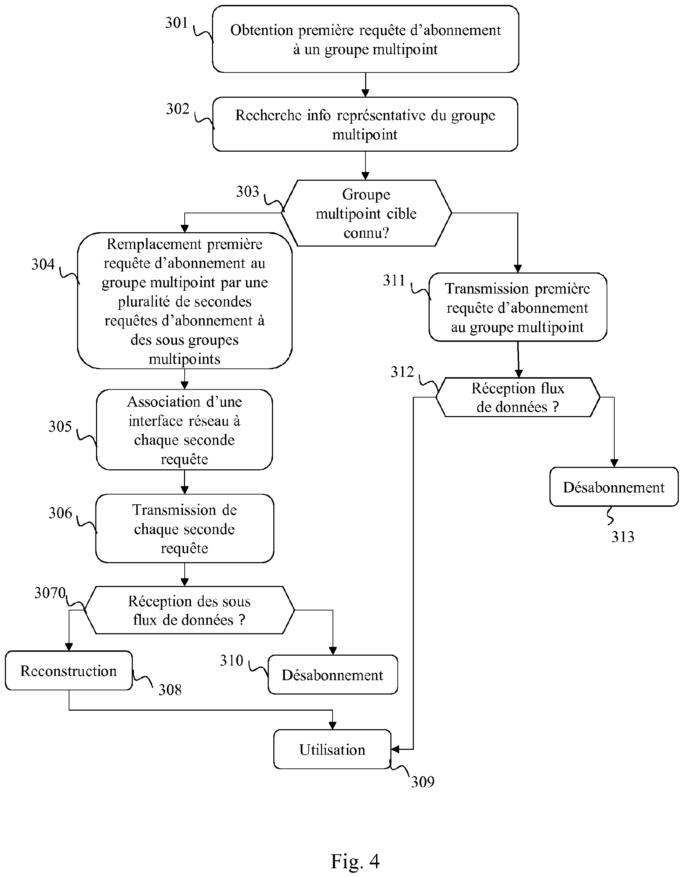

Dans un mode de réalisation, lors de sa mise sous tension, le client 103 ne possède pas la description de tous les groupes multipoints auxquels pourrait s'abonner un client final compris dans son réseau local. Il est nécessaire alors qu'il l'obtienne de la part du serveur 101. Le client 103 peut alors obtenir cette description, par exemple, en envoyant une requête HTTP (protocole de transfert hypertexte, « Hypertext transfer protocol » en terminologie anglo saxonne) sur une adresse URL (localisateur uniforme de ressource, « uniform ressource locator » en terminologie anglo-saxonne) du serveur 101. En réponse, le serveur 101 envoie la description par exemple sous forme texte, HTML (langage de balisage hypertexte, « Hypertext Markup Language » en terminologie anglo-saxonne), ou XML (langage de balisage extensible, « Extensible Markup Language » en terminologie anglo-saxonne). Nous verrons par la suite en relation avec l'étape 302 de la Fig. 4 et les Figs. 8 à 13 une deuxième méthode permettant au client 103 de récupérer la description basée sur le protocole IGMP.

La **Fig. 4** illustre schématiquement un deuxième exemple de procédé mis en oeuvre par le dispositif client 103, permettant de tirer bénéfice d'une pluralité d'interfaces réseaux reliant le dispositif client 103 au dispositif serveur 101, dans le cadre d'une communication multipoint. Ce procédé reprend les étapes 301, 304, 305, 306, 308 et 309 du procédé décrit en relation avec la Fig. 3 et ajoute des étapes supplémentaires.

Le procédé débute par l'étape 301 décrite en relation avec la Fig. 3.

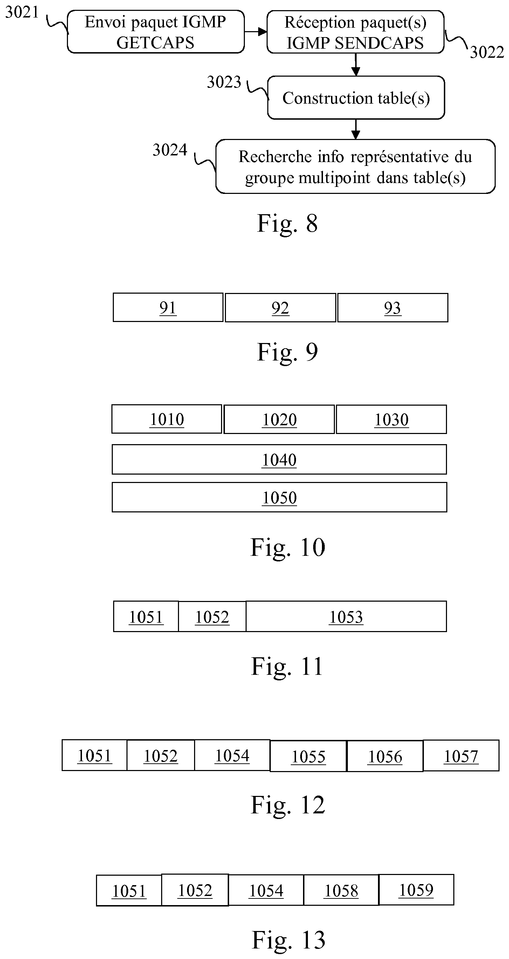

Dans une étape 302, le client 103 recherche une information représentative du groupe multipoint cible dans un ensemble d'informations représentatives de groupes multipoints. L'étape 302 est détaillée par la suite en relation avec les Figs. 8 à 13.

Dans une étape 303, le client 103 vérifie si l'information représentative dudit groupe multipoint cible se trouve dans l'ensemble d'informations représentatives de groupes multipoints et que dans l'information représentative du groupe cible, l'adresse du groupe multipoint cible est mise en correspondance avec une pluralité d'adresses de sous-groupes multipoints.

Si l'information représentative dudit groupe multipoint se trouve dans l'ensemble d'informations représentatives de groupes multipoints et que l'adresse multipoint du groupe cible est mise en correspondance avec une pluralité d'adresses de sous-groupes multipoints, le client 103 considère que le groupe multipoint cible est approprié pour une transmission utilisant l'ensemble des interfaces réseaux disponibles sur le client 103. Dans ce cas, le client 103 met en oeuvre les étapes 304 à 306 déjà expliquées en relation avec la Fig. 3.

Dans une étape 3070, le client 103 vérifie que tous les sous-flux de données correspondant aux secondes requêtes d'abonnement transmises par le client 103 sont reçus par le client 103. Si c'est le cas, le client 103 met en oeuvre les étapes 308 et 309 déjà expliquées.

Si au moins un sous-flux de données correspondant à une seconde requête transmise par le client 103 n'est pas reçu par le client 103, dans une étape 310, le client 103 transmet en direction du serveur 101 une requête de désabonnement pour chaque sous-groupe multipoint pour lequel une seconde requête d'abonnement a été transmise.

Lors de l'étape 303, si l'information représentative dudit groupe multipoint cible se trouve dans l'ensemble d'informations représentatives de groupes multipoints mais que l'adresse multipoint du groupe cible n'est pas mise en correspondance avec une pluralité d'adresses de sous-groupes multipoints, le client 103 considère que le groupe multipoint cible n'est pas approprié pour une transmission utilisant l'ensemble des interfaces réseaux disponibles sur le client 103. Dans ce cas, l'étape 303 est suivie d'une étape 311, au cours de laquelle, la première requête d'abonnement au groupe multipoint est transmise en direction du serveur 101.

Dans une étape 312, le client 103 vérifie que le flux de données correspondant au groupe multipoint cible est reçu.

Si le flux de données est reçu, le client 103 poursuit avec l'étape 309. Si le flux de données n'est pas reçu, le client 103 se désabonne du groupe multipoint cible.

Lors de l'étape 303, si l'information représentative dudit groupe multipoint ne se trouve pas dans l'ensemble d'informations représentatives de groupes multipoints, le client 103 abandonne la tentative d'abonnement au groupe multipoint cible.

La **Fig. 8** illustre schématiquement un exemple de procédé mis en oeuvre par le dispositif client 103, permettant de rechercher une information représentative d'un groupe multipoint dans un ensemble d'informations représentatives de groupes multipoints. Le procédé décrit en relation avec la Fig. 8 détaille une mise en oeuvre de l'étape 302. On suppose ici que le client 103, lors de sa mise sous tension, ne possède pas la description de tous les groupes multipoints auxquels pourrait s'abonner un client final compris dans le réseau local du client 103 et que, par conséquent, il est obligé d'obtenir cette description de la part du serveur 101.

Dans une étape 3021, le client 103 envoie une requête compatible avec le protocole IGMP, dite requête GETCAPS, sur toutes ses interfaces réseaux disponibles. Dans le contexte des Figs. 1C et 1D, les requêtes GETCAPS sont destinées à obtenir une description de la part du serveur 101 qui est le seul serveur disponible. Dans un autre mode de réalisation, si plusieurs serveurs sont disponibles, les requêtes GETCAPS sont destinées à chaque serveur, chaque serveur pouvant répondre à une requête GETCAPS qu'il reçoit en transmettant une description des groupes multicast auxquels pourrait s'abonner un client final compris dans le réseau local du client 103.

La **Fig. 9** illustre schématiquement un exemple de requête GETCAPS permettant d'obtenir une description des groupes multipoints que peut fournir un serveur. Une requête GETCAPS comprend un champ « type » 91, par exemple égal à 0x30 en hexadécimal, permettant d'identifier la requête GETCAPS, un champ « Max Resp Code » 92 permettant d'indiquer un temps maximum alloué pour obtenir une réponse d'un serveur et un champ « somme de contrôle (checksum en terminologie anglo-saxonne) » 93 comportant un code correcteur d'erreurs permettant de détecter une erreur dans la requête GETCAPS. Le champ « Max Resp. Code » fournit une indication de temps exprimée par exemple en dixième de seconde. Un serveur recevant une requête GETCAPS doit répondre dans un temps égal à la valeur du champ « Max Resp. Code » après réception de la requête GETCAPS.

Dans une étape 3022, le serveur 101 répond à la requête GETCAPS qu'il a reçu. Pour ce faire, il envoie une requête IGMP, dite requête SENDCAPS, fournissant une information représentative de chaque flux de données pouvant être délivré par le serveur 101 lorsqu'un client s'abonne à un groupe multipoint correspondant à ce flux de données.

La **Fig. 10** illustre schématiquement un exemple de requête SENDCAPS permettant à un dispositif serveur de fournir une information représentative de chaque flux de données pouvant être délivré par ledit dispositif serveur dans un groupe multipoint correspondant.

Une requête SENDCAPS comprend un champ « type » 1010, par exemple égal en hexadécimal à la valeur « 0x31 », permettant d'identifier la requête SENDCAPS. Une requête SENDCAPS comprend de plus un champ réservé « reserved » 1020, et un champ « somme de contrôle (checksum) » 1030 comportant un code correcteur d'erreurs permettant de détecter une erreur dans la requête SENDCAPS. Le champ « somme de contrôle (checksum) » est suivi d'un champ « TTL » 1040 (Temps de vie, « Time To Leave » en terminologie anglo-saxonne) permettant d'indiquer aux clients une durée de validité des informations contenues dans la requête SENCAPS. Le champ « TTL » est suivi d'au moins un champ optionnel 1050.

Plusieurs types de champs optionnels 1050 peuvent être transportés par une requête SENDCAPS. Dans l'application de diffusion de flux de données télévisuelles, un premier champ optionnel 1050, décrit en relation avec la Fig. 11, permet de fournir des informations sur un opérateur délivrant un flux de données télévisuelles. Le champ optionnel 1050 comprend ainsi un champ « type d'option » 1051, par exemple égal à la valeur « 1 », indiquant que le champ optionnel 1050 donne des informations sur un opérateur. A la suite du champ « type d'option » 1051, le champ optionnel 1050 comprend un champ « longueur » 1052, indiquant une longueur en octet d'un champ suivant « nom » 1053 indiquant le nom de l'opérateur.

Un deuxième champ optionnel 1050, décrit en relation avec la Fig. 12, permet de décrire un flux de données télévisuelles. Le champ optionnel 1050 décrit en relation avec la Fig. 12 comprend un champ « type d'option » 1051, par exemple égal à la valeur « 5 », indiquant que le champ optionnel 1050 donne des informations sur un flux de données. A la suite du champ « type d'option » 1051, le champ optionnel 1050 comprend un champ « longueur » 1052, indiquant une longueur cumulée en octet de champs suivants « code de chaîne » 1054, « nom de chaîne » 1055, « débit de flux » 1056 et « adresse de groupe » 1057. Le champ « code de chaîne » 1054 donne un code alloué à une chaîne de télévision correspondant à un flux de données télévisuelles. Le champ « nom de chaîne » 1055 donne un nom correspondant au nom de la chaîne de télévision indiqué par le champ « code de chaîne ». Le champ « débit de flux » 1056 indique un débit d'émission du flux de données. Le champ « adresse de groupe » 1057 indique une adresse multipoint permettant de s'abonner au groupe multipoint correspondant au flux de données.

Un troisième champ optionnel 1050, décrit en relation avec la **Fig. 13****,** permet de donner des informations sur des sous-flux de données correspondant à un flux de données. Le champ optionnel décrit en relation avec la Fig. 13, permet ainsi de faire un lien entre un groupe et des sous-groupes multipoints correspondant au groupe multipoint. Le champ optionnel 1050 décrit en relation avec la Fig. 13 comprend un champ « type d'option » 1051, par exemple égal à la valeur « 6 », indiquant que le champ optionnel 1050 donne des informations sur des sous-flux de données correspondant à un flux de données. A la suite du champ « type d'option » 1051, le champ optionnel 1050 comprend un champ « longueur » 1052, indiquant une longueur cumulée en octet de champs suivants, « code de chaîne » 1055, « adresse de sous-groupe » 1058, et « débit de sous-flux » 1059, le champ optionnel décrit en relation avec la Fig. 13 contenant plusieurs paires de champs « adresse de sous-groupe » 1058 et « débit de sous-flux » 1059 successives. Les champs « adresse de sous-groupe » 1058 et « débit de sous-flux » 1059 ont une taille fixe. Le champ « adresse de sous-groupe » 1058 donne l'adresse d'un sous-groupe multipoint correspondant à un sous-flux de données. Le champ « débit de sous-flux » indique un débit d'émission d'un sous-flux de données. La présence du champ « code de chaîne » 1055 permet de faire un lien entre un flux de données décrit dans le champ optionnel 1050 décrite en relation avec la Fig. 12 et des sous-flux de données décrits dans le champ optionnel 1050 décrite en relation avec la Fig. 13.

Dans certain cas, un envoi d'une requête GETCAPS sur une interface réseau n'est pas suivi d'une réception d'une requête SENDCAPS. Cette interface réseau peut, par exemple, être reliée à un réseau tiers d'un opérateur tiers que n'est pas un opérateur pour lequel le client 103 possède un abonnement. Nous appelons par la suite un opérateur pour lequel le client 103 possède un abonnement, opérateur principal. Dans un mode de réalisation, afin de pouvoir utiliser le réseau tiers, une variante du premier champ optionnel 1050, décrit en relation avec la Fig. 11 est utilisée. Cette variante permet au serveur 101, de fournir au client 103, des informations sur une unité réseau de l'opérateur principal, accessible depuis un réseau tiers, et permettant au client 103 de communiquer avec le serveur 101. Dans cette variante de l'option 1050 décrite en relation avec la Fig. 11, le champ « type d'option » 1051, prend une valeur indiquant que le champ optionnel 1050 fourni une information permettant de communiquer avec le serveur 101 à travers un réseau tiers. Par exemple, le champ « type d'option » prend la valeur « 2 ». Le champ « longueur » 1052, indique une longueur en octet du champ suivant « nom » 1053. Le champ « nom » 1053 indique un nom de domaine complétement qualifié (« Fully Qualified Domain Name (FQDN) » en terminologie anglo-saxonne) permettant de spécifier un adresse absolue de l'unité réseau de l'opérateur principale accessible par le réseau tiers. Chaque requête du client 103 transmise sur l'interface réseau reliée au réseau tiers est alors transmise en direction de l'unité réseau de l'opérateur principal spécifiée dans le champ « nom » 1053, qui les redirigera vers le serveur 101.

Dans une étape 3023, lorsqu'il reçoit une requête SENDCAPS, le client 103 construit l'ensemble d'informations représentatives de groupes multipoints. L'ensemble d'informations représentatives de groupes multipoints forme une description des groupes multipoints auxquels peut s'abonner un client final du réseau local du client 103. Cet ensemble peut par exemple être mis sous forme de tableau ayant pour entrée une adresse multipoint d'un groupe multipoint, dit groupe multipoint d'entrée, et fournissant pour chaque groupe multipoint d'entrée, une description comprenant des adresses de sous-groupes multipoints correspondant au groupe multipoint d'entrée et d'autres informations sur le groupe multipoint obtenues lors de la réception de la requête SENDCAPS.

Dans une étape 3024, le client 103 recherche dans le tableau qu'il a construit le groupe multipoint cible. L'étape 3024 est suivie de l'étape 303 déjà décrite.

Il est fréquent qu'en cours de transmission d'un flux de données selon un mode de transmission multipoint, certaines interfaces d'un client deviennent inutilisables, par exemple à cause d'une rupture d'un lien de communication ou deviennent disponibles, par exemple, suite à une ouverture d'un nouveau lien de communication.

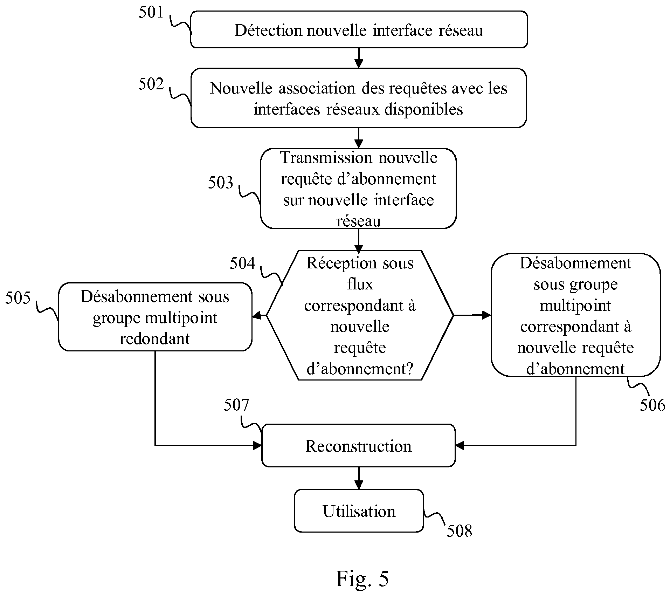

La **Fig. 5** illustre schématiquement un exemple de procédé mis en oeuvre par un dispositif client lors d'une apparition d'une nouvelle interface réseau reliant le dispositif client 103 au dispositif serveur 101.

Dans une étape 501, le dispositif client 103 détecte une ouverture d'une nouvelle interface réseau reliant le dispositif client 103 au dispositif serveur 101.

Dans une étape 502, le dispositif client 103 enrichit son ensemble d'interfaces réseaux disponibles en y ajoutant la nouvelle interface réseau détectée. Au cours de l'étape 502, le client 103 associe la nouvelle interface réseau avec au moins une seconde requête d'abonnement à un sous-groupe multipoint de l'ensemble de sous-groupes multipoints correspondant au groupe multipoint cible.

Dans une étape 503, le client 103 transmet en direction du serveur 101, chaque seconde requête d'abonnement associée à la nouvelle interface réseau en utilisant la nouvelle interface réseau.

Dans une étape 504, le client 103 vérifie que chaque sous-flux de données correspondant à une seconde requête transmise sur la nouvelle interface réseau est reçu.

Si chaque sous-flux de données est reçu, l'étape 504 est suivie d'une étape 505.

Les secondes requêtes d'abonnement transmises sur la nouvelle interface réseau correspondent à des sous-flux de données déjà reçus sur au moins une autre interface réseau différente de la nouvelle interface réseau. En effet, lors de l'étape 306, le client 103 avait transmis des secondes requêtes d'abonnement pour l'ensemble des sous-flux de données permettant de reconstruire le flux de données souhaité par le client final. Ces secondes requêtes avaient alors été transmises sur les interfaces réseaux du client 103 disponibles lors de la mise en oeuvre de l'étape 306. Pour éviter de recevoir plusieurs fois un même sous-flux de données, lors de l'étape 505, lorsqu'un même sous-flux de données, dit sous-flux dupliqué, est reçu sur plusieurs interfaces réseaux dont la nouvelle interface réseau, le client 103 transmet une requête de désabonnement pour chaque sous-groupe multipoint correspondant au sous-flux dupliqué reçu sur une autre interface réseau que la nouvelle interface réseau. Pour ce faire, le client 103 transmet une requête de désabonnement pour les sous-groupes multipoints correspondant au sous-flux dupliqué sur chaque autre interface recevant le sous-flux dupliqué.

Suite à l'étape 505, le client 103 met en oeuvre une étape 507 et une étape 508 respectivement identiques aux étapes 308 et 309.

Dans une mode de réalisation, si, lors de l'étape 504, un sous-flux de données correspondant à une requête transmise sur la nouvelle interface réseau n'est pas reçu, l'étape 504 est suivie d'une étape 506. Lors de l'étape 506, le client transmet une requête de désabonnement pour le sous-groupe multipoint correspondant au sous-flux de données non reçu sur la nouvelle interface réseau afin d'éviter que ce sous-flux soit reçu plus tard et qu'il soit par conséquent dupliqué.

L'étape 506 est suivie des étapes 507 et 508.

La **Fig. 6** illustre schématiquement un exemple de procédé mis en oeuvre par un dispositif client lors d'une disparition d'une interface réseau reliant le client 103 au serveur 101 et disponible lors de l'étape 306.

Dans une étape 601, le dispositif client détecte une suppression d'une interface réseau reliant le client 103 au serveur 101.

Dans une étape 602, le dispositif client 103 réduit son ensemble d'interfaces réseaux disponibles en retirant l'interface réseau supprimée. Au cours de l'étape 602, le client 103 associe chaque seconde requête d'abonnement préalablement associée à l'interface réseau supprimée à une interface réseau de l'ensemble d'interfaces réseaux réduit.

Dans une étape 603, le client 103 transmet en direction du dispositif serveur 101 chaque seconde requête d'abonnement préalablement associée à l'interface réseau supprimée en utilisant l'interface réseau de l'ensemble d'interfaces réseaux réduit avec laquelle elle est associée.

Dans une étape 604, le client 103 vérifie que chaque sous-flux correspondant à une seconde requête préalablement associée à l'interface supprimée est bien reçu.

Si chaque sous-flux est bien reçu, le client 103 met en oeuvre des étapes 605 et 606 respectivement identiques aux étapes 308 et 309.

Si au moins un sous-flux n'est pas reçu, le client 103 met en oeuvre une étape 609 identique à l'étape 310.

La **Fig. 7** illustre schématiquement un procédé mis en oeuvre par le serveur 101, permettant de transmettre des sous-flux multipoints, correspondant à un flux multipoint, à au moins un dispositif client.

Dans une étape 701, le serveur 101 reçoit chaque seconde requête d'abonnement sur une interface réseau, dite interface de réception. Le serveur mémorise alors sur quelle interface de réception il a reçu chaque requête et associe ladite interface de réception au sous-groupe multipoint indiqué dans la requête.

Dans une étape 702, le serveur 101 répartit des paquets de données du flux de données dans les sous-flux de données correspondant aux groupes multipoints pour lesquels il a reçu une seconde requête d'abonnement. Dans un mode de réalisation, le serveur 101 répartit ces paquets en prenant en compte un débit cible pour chaque sous-flux de données. Ce débit cible correspond au débit de chaque sous-flux indiqué dans les requêtes SENDCAPS.

Dans une étape 703, le serveur 101 transmet chaque sous-flux de données sur l'interface de réception associée au sous-groupe multipoint correspondant au sous-flux. De cette manière, le serveur 101 s'assure que ce sous-flux de données soit reçu sur l'interface réseau du client 103 utilisée pour transmettre la seconde requête d'abonnement correspondant à ce sous-flux.

Dans l'exemple des Figs. 1C et 1D, le procédé décrit en relation avec la Fig. 7 est mis en oeuvre lors d'un premier abonnement d'au moins un des clients 103, 104 ou 105 aux sous-groupes multipoints correspondant au groupe multipoint cible. Dans l'exemple de la Fig. 7, ce premier abonnement est mis en oeuvre par le client 103. Si, suite à ce premier abonnement du client 103, au moins un des clients 104 et 105 lance une procédure d'abonnement aux mêmes sous-groupes multipoints correspondant au groupe multipoint cible, le serveur n'a pas de rôle actif dans ces abonnements. En effet, ces abonnements sont entièrement gérés par les routeurs 102 et 111 qui se chargent de dupliquer les paquets de données des sous-flux de données pour les clients 104 et/ou 105.

## Revendications

1. Procédé de transmission d'un flux de données selon un mode de transmission multipoint entre un dispositif serveur (101) et un dispositif client (103, 104, 105), le procédé étant **caractérisé en ce qu'**il comprend les étapes suivantes mises en oeuvre par le dispositif client :
obtenir (301) une première requête d'abonnement à un groupe multipoint, dit groupe multipoint cible, permettant d'obtenir un flux de données ;
remplacer (304) la première requête d'abonnement au groupe multipoint cible par une pluralité de secondes requêtes d'abonnement, chaque seconde requête d'abonnement étant associée à un sous-groupe multipoint d'un ensemble de sous-groupes multipoints, chaque sous-groupe multipoint permettant d'obtenir un sous-flux de données formant une sous-partie du flux de données, l'ensemble des sous-groupes multipoints permettant d'obtenir ledit flux de données en combinant les sous-flux de données;
associer (305) une interface réseau à chaque seconde requête d'abonnement, chaque interface réseau associée étant prise dans un ensemble d'interfaces réseaux, reliant le dispositif serveur au dispositif client, disponibles sur le dispositif client ;
transmettre (306) chaque seconde requête d'abonnement en direction du dispositif serveur sur l'interface réseau qui a été associée à ladite seconde requête ;
recevoir (307) des sous-flux de données correspondant aux secondes requêtes d'abonnement transmises, chaque sous-flux de données reçu étant reçu sur l'interface réseau sur laquelle a été transmise la seconde requête d'abonnement associée audit sous-flux de données ;
reconstruire (308) le flux de données en utilisant les sous-flux de données reçus afin de permettre une utilisation (309) dudit flux de données.

2. Procédé selon la revendication 1 **caractérisé en ce que**, suite à l'obtention de la première requête d'abonnement au groupe multipoint cible, le dispositif client recherche (302) une information représentative dudit groupe multipoint cible dans un ensemble d'informations représentatives de groupes multipoints, la première requête d'abonnement étant remplacée par les secondes requêtes d'abonnement lorsque l'information représentative dudit groupe multipoint cible est retrouvée (303) dans l'ensemble d'informations représentatives de groupes multipoints.

3. Procédé selon la revendication 2 **caractérisé en ce que**, lors de la recherche de l'information représentative dudit groupe multipoint cible dans l'ensemble d'informations représentatives de groupes multipoints, le dispositif client met en oeuvre les étapes suivantes :
envoyer (3021) en direction du dispositif serveur une requête, dite requête GETCAPS, demandant des informations représentatives de chaque flux de données pouvant être délivré par ledit dispositif serveur ;
recevoir (3022) de la part du dispositif serveur au moins une requête, dite requête SENDCAPS, fournissant une information représentative de chaque flux de données pouvant être délivré par ledit dispositif serveur ;
construire (3023) l'ensemble d'informations représentatives de groupes multipoints à partir des informations représentatives de flux de données reçues ;
rechercher (3024) l'information représentative dudit groupe multipoint cible dans l'ensemble d'informations représentatives de groupes multipoints ainsi construit.

4. Procédé selon la revendication 3 **caractérisé en ce que**, l'information représentative de chaque flux de données comprend une information représentative d'une adresse multipoint (1057) dudit flux de données et une information représentative d'un ensemble (1059, 1060) de sous-flux de données correspondant audit flux de données et, pour chaque sous-flux de données, une information représentative d'une adresse multipoint (1060) dudit sous-flux de données.

5. Procédé selon la revendication 4 **caractérisé en ce que**, l'information représentative de chaque flux de données comprend en outre, une information représentative du débit de chaque flux de données (1056) et de chaque sous-flux de données (1059).

6. Procédé selon la revendication 3, 4 ou 5 **caractérisé en ce que**, chaque requête GETCAPS et chaque requête SENDCAPS est compatible avec un protocole de gestion de groupe internet (IGMP).

7. Procédé selon l'une quelconque des revendications 1 à 6 **caractérisé en ce que**, lors de la réception des sous-flux de données correspondant aux secondes requêtes d'abonnement transmises, le dispositif client vérifie (307) que pour chaque seconde requête d'abonnement transmise, le sous-flux de données correspondant au sous-groupe multipoint associé à ladite seconde requête d'abonnement est reçu, et reconstruit (308) ledit flux de données si chaque sous-flux de données est reçu.

8. Procédé selon la revendication 7 **caractérisé en ce que**, lorsqu'au moins un sous-flux de données n'est pas reçu, le dispositif client transmet (310), en direction du dispositif serveur, une requête de désabonnement pour chaque sous-groupe multipoint pour lequel une seconde requête d'abonnement a été transmise.

9. Procédé selon l'une quelconque des revendications 2 à 8 **caractérisé en ce que**, lorsque l'information représentative dudit groupe multipoint n'est pas retrouvée dans l'ensemble d'informations représentatives de groupes multipoints, le dispositif client transmet la première requête d'abonnement en direction du dispositif serveur de sorte à recevoir le flux de données.

10. Procédé selon l'une quelconque des revendications précédentes **caractérisé en ce que**, lorsque pendant la réception des sous-flux de données correspondant aux secondes requêtes d'abonnement transmises, le dispositif client détecte (501) une ouverture d'une nouvelle interface réseau reliant le dispositif client au dispositif serveur, le dispositif client met en oeuvre les étapes suivantes :
enrichir (502) ledit ensemble d'interfaces réseaux en y ajoutant la nouvelle interface réseau détectée;
associer (502) la nouvelle interface réseau avec au moins une seconde requête d'abonnement à un sous-groupe multipoint de l'ensemble de sous-groupes multipoints correspondant au groupe multipoint cible ;
transmettre (503), en direction du dispositif serveur, chaque seconde requête d'abonnement associée à la nouvelle interface réseau en utilisant la nouvelle interface réseau ;
lorsqu'un sous-flux de données, dit sous-flux dupliqué, correspondant à un sous-groupe multipoint, associé à une seconde requête d'abonnement transmise sur la nouvelle interface réseau, est reçu simultanément sur une pluralité d'interfaces réseaux comprenant la nouvelle interface réseau, transmettre une requête de désabonnement pour chaque sous-groupe multipoint correspondant à un sous-flux dupliqué reçu sur une autre interface réseau que la nouvelle interface réseau.

11. Procédé selon la revendication 10 **caractérisé en ce que**, lorsqu'un sous-flux de données correspondant à un sous-groupe multipoint, associé à une seconde requête d'abonnement transmise sur la nouvelle interface réseau, n'est pas reçu sur la nouvelle interface réseau, le dispositif client transmet, en direction du dispositif serveur, une requête de désabonnement pour le sous-groupe multipoint correspondant au sous-flux de données non reçu.

12. Procédé selon l'une quelconque des revendications précédentes **caractérisé en ce que**, lorsque, pendant la réception des sous-flux de données correspondant aux secondes requêtes d'abonnement transmises, le dispositif client détecte (601) une suppression d'une interface réseau reliant le dispositif client au dispositif serveur, le dispositif client met en oeuvre les étapes suivantes :
réduire (602) ledit ensemble d'interfaces réseaux en retirant l'interface réseau supprimée;
associer (602) chaque seconde requête d'abonnement préalablement associée à l'interface réseau supprimée à une interface réseau de l'ensemble d'interfaces réseaux réduit ;
transmettre (603), en direction du dispositif serveur, chaque seconde requête d'abonnement préalablement associée à l'interface réseau supprimée en utilisant l'interface réseau de l'ensemble d'interfaces réseaux réduit avec laquelle elle est associée ;
reconstruire (605) le flux multipoint si, suite à la transmission de chaque seconde requête d'abonnement préalablement associée à l'interface réseau supprimée, chaque sous-flux de données correspondant à chaque seconde requête d'abonnement transmise est reçu.

13. Procédé selon la revendication 12 **caractérisé en ce que**, si, suite à la transmission de chaque seconde requête d'abonnement préalablement associée à l'interface réseau supprimée, au moins un sous-flux de données correspondant à une seconde requête d'abonnement transmise n'est pas reçu, le dispositif client transmet (607) en direction du dispositif serveur une requête de désabonnement pour chaque sous-groupe multipoint.

14. Procédé selon l'une quelconque des revendications précédentes, **caractérisé en ce que**, le procédé comprend les étapes suivantes mises en oeuvre par le dispositif serveur :
recevoir (701) chaque seconde requête d'abonnement sur une interface réseau, dite interface de réception ;
répartir (702) les données du flux de données dans les sous-flux de données ;
transmettre (703) chaque sous-flux de données sur une interface réseau correspondant à l'interface de réception de la seconde requête d'abonnement associée au sous-groupe multipoint correspondant audit sous-flux de données.

15. Procédé selon la revendication 14 lorsqu'elle dépend de la revendication 5 **caractérisé en ce que**, la répartition des données du flux de données dans les sous-flux de données se fait en prenant en compte l'information représentative du débit de chaque flux de données et/ou de chaque sous-flux de données.

16. Dispositif client (103, 104, 105) apte à recevoir un flux de données selon un mode de transmission multipoint de la part d'un dispositif serveur (101) comprenant les moyens suivants:
des moyens d'obtention (301) pour obtenir une première requête d'abonnement à un groupe multipoint, dit groupe multipoint cible, permettant d'obtenir un flux de données ;
des moyens de remplacement (304) pour remplacer la première requête d'abonnement au groupe multipoint cible par une pluralité de secondes requêtes d'abonnement, chaque seconde requête d'abonnement étant associée à un sous-groupe multipoint d'un ensemble de sous-groupes multipoints, chaque sous-groupe multipoint permettant d'obtenir un sous-flux de données formant une sous-partie du flux de données, l'ensemble des sous-groupes multipoints permettant d'obtenir ledit flux de données en combinant les sous-flux de données;
des moyens d'association (305) pour associer une interface réseau à chaque seconde requête d'abonnement, chaque interface réseau associée étant prise dans un ensemble d'interfaces réseaux, reliant le dispositif client au dispositif serveur, disponibles sur le dispositif client ;
des moyens de transmission (306) pour transmettre chaque seconde requête d'abonnement au dispositif serveur sur l'interface réseau qui lui a été associée ;
des moyens de réception (3070) pour recevoir des sous-flux de données correspondant aux secondes requêtes d'abonnement transmises, chaque sous-flux de données reçu étant reçu sur l'interface réseau sur laquelle a été transmise la seconde requête d'abonnement associée audit sous-flux de données ;
des moyens de reconstruction (308) pour reconstruire le flux de données en utilisant les sous-flux de données reçus afin de permettre une utilisation (309) dudit flux de données.

17. Système de communication comprenant un dispositif serveur et au moins un dispositif client selon la revendication 16.

18. Programme d'ordinateur, **caractérisé en ce qu'**il comprend des instructions pour mettre en oeuvre, par un dispositif client ou un dispositif serveur, le procédé selon l'une quelconque des revendications 1 à 15, lorsque ledit programme est exécuté par un processeur du dispositif client ou du dispositif serveur.

19. Moyens de stockage, **caractérisés en ce qu'**ils stockent un programme d'ordinateur comprenant des instructions pour mettre en oeuvre, par un dispositif serveur ou un dispositif client, le procédé selon l'une quelconque des revendications 1 à 15, lorsque ledit programme est exécuté par un processeur dudit dispositif serveur ou dudit dispositif client.

## Patentansprüche

1. Verfahren zur Übertragung eines Datenstroms gemäß einem Punkt-zu-Mehrpunkt-Übertragungsmodus zwischen einer Servervorrichtung (101) und einer Clientvorrichtung (103, 104, 105), wobei das Verfahren **dadurch gekennzeichnet ist, dass** es die folgenden Schritte umfasst, die von der Clientvorrichtung durchgeführt werden:
Erhalten (301) einer ersten Abonnementanforderung an eine Multicast-Gruppe, Ziel-Multicast-Gruppe genannt, die es ermöglicht, einen Datenstrom zu erhalten;
Ersetzen (304) der ersten Abonnementanforderung an die Ziel-Multicast-Gruppe durch mehrere zweite Abonnementanforderungen, wobei jede zweite Abonnementanforderung einer Multicast-Untergruppe aus einer Menge von Multicast-Untergruppen zugeordnet ist, wobei jede Multicast-Untergruppe ermöglicht, einen Unterdatenstrom zu erhalten, der einen Teilstrom des Datenstroms bildet, wobei die Menge der Multicast-Untergruppen ermöglicht, den Datenstrom zu erhalten, indem die Unterdatenströme kombiniert werden;
Zuordnen (305) einer Netzschnittstelle zu jeder zweiten Abonnementanforderung, wobei jede zugeordnete Netzschnittstelle in einer Menge von Netzschnittstellen enthalten ist, welche die Servervorrichtung mit der Clientvorrichtung verbinden und welche an der Clientvorrichtung verfügbar sind;
Übertragen (306) jeder zweiten Abonnementanforderung an die Servervorrichtung auf der Netzschnittstelle, welche der zweiten Anforderung zugeordnet worden ist;
Empfangen (307) der Unterdatenströme, die den übertragenen zweiten Abonnementanforderungen entsprechen, wobei jeder empfangene Unterdatenstrom auf der Netzschnittstelle empfangen wird, auf welcher die zweite Abonnementanforderung übertragen worden ist, die diesem Unterdatenstrom zugeordnet ist;
Rekonstruieren (308) des Datenstroms unter Verwendung der empfangenen Unterdatenströme, um eine Verwendung (309) des Datenstroms zu ermöglichen.

2. Verfahren nach Anspruch 1, **dadurch gekennzeichnet, dass** im Anschluss an das Erhalten der ersten Abonnementanforderung an die Ziel-Multicast-Gruppe die Clientvorrichtung nach einer für die Ziel-Multicast-Gruppe repräsentativen Information in einer Menge von für Multicast-Gruppen repräsentativen Informationen sucht (302), wobei die erste Abonnementanforderung durch die zweiten Abonnementanforderungen ersetzt wird, wenn die für die Ziel-Multicast-Gruppe repräsentative Information in der Menge von für Multicast-Gruppen repräsentativen Informationen gefunden wird (303).

3. Verfahren nach Anspruch 2, **dadurch gekennzeichnet, dass** bei der Suche nach der für die Ziel-Multicast-Gruppe repräsentativen Information in der Menge von für Multicast-Gruppen repräsentativen Informationen die Clientvorrichtung die folgenden Schritte ausführt:
Senden (3021), an die Servervorrichtung, einer Anforderung, GETCAPS-Anforderung genannt, welche Informationen anfordert, die für jeden Datenstrom repräsentativ sind, der von der Servervorrichtung geliefert werden kann;
Empfangen (3022), von der Servervorrichtung, wenigstens einer Anforderung, SENDCAPS genannt, welche eine Information liefert, die für jeden Datenstrom repräsentativ ist, der von der Servervorrichtung geliefert werden kann;
Konstruieren (3023) der Menge von Informationen, die für Multicast-Gruppen repräsentativ sind, aus den empfangenen Informationen, die für Datenströme repräsentativ sind;
Suchen (3024) nach der Information, die für die Ziel-Multicast-Gruppe repräsentativ ist, in der so konstruierten Menge von Informationen, die für Multicast-Gruppen repräsentativ sind.

4. Verfahren nach Anspruch 3, **dadurch gekennzeichnet, dass** die Information, die für jeden Datenstrom repräsentativ ist, eine Information, die für eine Multicast-Adresse (1057) des Datenstroms repräsentativ ist, und eine Information, die für eine Menge (1059, 1060) von Unterdatenströmen repräsentativ ist, die dem Datenstrom entsprechen, und für jeden Unterdatenstrom eine Information, die für eine Multicast-Adresse (1060) des Unterdatenstroms repräsentativ ist, umfasst.

5. Verfahren nach Anspruch 4, **dadurch gekennzeichnet, dass** die Information, die für jeden Datenstrom repräsentativ ist, außerdem eine Information umfasst, die für die Datenrate jedes Datenstroms (1056) und jedes Unterdatenstroms (1059) repräsentativ ist.

6. Verfahren nach Anspruch 3, 4 oder 5, **dadurch gekennzeichnet, dass** jede Anforderung GETCAPS und jede Anforderung SENDCAPS mit einem Internet Group Management Protocol (IGMP) kompatibel ist.

7. Verfahren nach einem der Ansprüche 1 bis 6, **dadurch gekennzeichnet, dass** beim Empfang der Unterdatenströme, die den übertragenen zweiten Abonnementanforderungen entsprechen, die Clientvorrichtung überprüft (307), dass für jede übertragene zweite Abonnementanforderung der Unterdatenstrom empfangen wird, welcher der dieser zweiten Abonnementanforderung zugeordneten Multicast-Untergruppe entspricht, und den Datenstrom rekonstruiert (308), falls jeder Unterdatenstrom empfangen wird.

8. Verfahren nach Anspruch 7, **dadurch gekennzeichnet, dass**, wenn wenigstens ein Unterdatenstrom nicht empfangen wird, die Clientvorrichtung an die Servervorrichtung eine Abonnementabmeldungsanforderung für jede Multicast-Untergruppe überträgt (310), für welche eine zweite Abonnementanforderung übertragen worden ist.

9. Verfahren nach einem der Ansprüche 2 bis 8, **dadurch gekennzeichnet, dass**, wenn die für die Multicast-Gruppe repräsentative Information nicht in der Menge von für Multicast-Gruppen repräsentativen Informationen gefunden wird, die Clientvorrichtung die erste Abonnementanforderung an die Servervorrichtung überträgt, um den Datenstrom zu empfangen.

10. Verfahren nach einem der vorhergehenden Ansprüche, **dadurch gekennzeichnet, dass**, wenn während des Empfangs der Unterdatenströme, die den übertragenen zweiten Abonnementanforderungen entsprechen, die Clientvorrichtung ein Öffnen einer neuen Netzschnittstelle erkennt (501), welche die Clientvorrichtung mit der Servervorrichtung verbindet, die Clientvorrichtung die folgenden Schritte ausführt:
Erweitern (502) der Menge von Netzschnittstellen durch Hinzufügen der erkannten neuen Netzschnittstelle zu ihr;
Zuordnen (502) der neuen Netzschnittstelle mit wenigstens einer zweiten Abonnementanforderung zu einer Multicast-Untergruppe der Menge von Multicast-Untergruppen, die der Ziel-Multicast-Gruppe entspricht;
Übertragen (503), an die Servervorrichtung, jeder der neuen Netzschnittstelle zugeordneten zweiten Abonnementanforderung unter Verwendung der neuen Netzschnittstelle;
wenn ein Unterdatenstrom, duplizierter Unterstrom genannt, der einer Multicast-Untergruppe entspricht, die einer auf der neuen Netzschnittstelle übertragenen zweiten Abonnementanforderung zugeordnet ist, gleichzeitig auf mehreren Netzschnittstellen empfangen wird, welche die neue Netzschnittstelle umfassen, Übertragen einer Abonnementabmeldungsanforderung für jede Multicast-Untergruppe, die einem duplizierten Unterstrom entspricht, der auf einer anderen Netzschnittstelle als der neuen Netzschnittstelle empfangen wird.

11. Verfahren nach Anspruch 10, **dadurch gekennzeichnet, dass**, wenn ein Unterdatenstrom, der einer Multicast-Untergruppe entspricht, die einer auf der neuen Netzschnittstelle übertragenen zweiten Abonnementanforderung zugeordnet ist, nicht auf der neuen Netzschnittstelle empfangen wird, die Clientvorrichtung an die Servervorrichtung eine Abonnementabmeldungsanforderung für die Multicast-Untergruppe überträgt, die dem nicht empfangenen Unterdatenstrom entspricht.

12. Verfahren nach einem der vorhergehenden Ansprüche, **dadurch gekennzeichnet, dass**, wenn während des Empfangs der Unterdatenströme, die den übertragenen zweiten Abonnementanforderungen entsprechen, die Clientvorrichtung einen Wegfall einer Netzschnittstelle erkennt (601), welche die Clientvorrichtung mit der Servervorrichtung verbindet, die Clientvorrichtung die folgenden Schritte ausführt:
Verkleinern (602) der Menge von Netzschnittstellen durch Entfernen der weggefallenen Netzschnittstelle;
Zuordnen (602) jeder zweiten Abonnementanforderung, die zuvor der weggefallenen Netzschnittstelle zugeordnet war, zu einer Netzschnittstelle der verkleinerten Menge von Netzschnittstellen;
Übertragen (603), an die Servervorrichtung, jeder zweiten Abonnementanforderung, die zuvor der weggefallenen Netzschnittstelle zugeordnet war, unter Verwendung der Netzschnittstelle der verkleinerten Menge von Netzschnittstellen, zu der sie zugeordnet wurde;
Rekonstruieren (605) des Multicast-Stroms, falls im Anschluss an die Übertragung jeder zweiten Abonnementanforderung, die zuvor der weggefallenen Netzschnittstelle zugeordnet war, alle Unterdatenströme, die diesen übertragenen zweiten Abonnementanforderungen entsprechen, empfangen werden.

13. Verfahren nach Anspruch 12, **dadurch gekennzeichnet, dass**, falls im Anschluss an die Übertragung jeder zweiten Abonnementanforderung, die zuvor der weggefallenen Netzschnittstelle zugeordnet war, wenigstens ein Unterdatenstrom, der einer übertragenen zweiten Abonnementanforderung entspricht, nicht empfangen wird, die Clientvorrichtung an die Servervorrichtung eine Abonnementabmeldungsanforderung für jede Multicast-Untergruppe überträgt (607).

14. Verfahren nach einem der vorhergehenden Ansprüche, **dadurch gekennzeichnet, dass** das Verfahren die folgenden Schritte umfasst, die von der Servervorrichtung durchgeführt werden:
Empfangen (701) jeder zweiten Abonnementanforderung auf einer Netzschnittstelle, Empfangsschnittstelle genannt;
Aufteilen (702) der Daten des Datenstroms in die Unterdatenströme;
Übertragen (703) jedes Unterdatenstroms auf einer Netzschnittstelle, die der Empfangsschnittstelle der zweiten Abonnementanforderung entspricht, die der diesem Unterdatenstrom entsprechenden Multicast-Untergruppe zugeordnet ist.

15. Verfahren nach Anspruch 14, wenn abhängig von Anspruch 5, **dadurch gekennzeichnet, dass** die Aufteilung der Daten des Datenstroms in die Unterdatenströme unter Berücksichtigung der Information erfolgt, die für die Datenrate jedes Datenstroms und/oder jedes Unterdatenstroms repräsentativ ist.

16. Clientvorrichtung (103, 104, 105), welche in der Lage ist, einen Datenstrom gemäß einem Punkt-zu-Mehrpunkt-Übertragungsmodus von einer Servervorrichtung (101) zu empfangen, und die folgenden Mittel umfasst:
Erhaltemittel (301) zum Erhalten einer ersten Abonnementanforderung an eine Multicast-Gruppe, Ziel-Multicast-Gruppe genannt, die es ermöglicht, einen Datenstrom zu erhalten;
Ersetzungsmittel (304) zum Ersetzen der ersten Abonnementanforderung an die Ziel-Multicast-Gruppe durch mehrere zweite Abonnementanforderungen, wobei jede zweite Abonnementanforderung einer Multicast-Untergruppe aus einer Menge von Multicast-Untergruppen zugeordnet ist, wobei jede Multicast-Untergruppe ermöglicht, einen Unterdatenstrom zu erhalten, der einen Teilstrom des Datenstroms bildet, wobei die Menge der Multicast-Untergruppen ermöglicht, den Datenstrom zu erhalten, indem die Unterdatenströme kombiniert werden;
Zuordnungsmittel (305) zum Zuordnen einer Netzschnittstelle zu jeder zweiten Abonnementanforderung, wobei jede zugeordnete Netzschnittstelle in einer Menge von Netzschnittstellen enthalten ist, welche die Clientvorrichtung mit der Servervorrichtung verbinden und welche an der Clientvorrichtung verfügbar sind;
Übertragungsmittel (306) zum Übertragen jeder zweiten Abonnementanforderung an die Servervorrichtung auf der Netzschnittstelle, welche ihr zugeordnet worden ist;
Empfangsmittel (3070) zum Empfangen der Unterdatenströme, die den übertragenen zweiten Abonnementanforderungen entsprechen, wobei jeder empfangene Unterdatenstrom auf der Netzschnittstelle empfangen wird, auf welcher die zweite Abonnementanforderung übertragen worden ist, die diesem Unterdatenstrom zugeordnet ist;
Rekonstruktionsmittel (308) zum Rekonstruieren des Datenstroms unter Verwendung der empfangenen Unterdatenströme, um eine Verwendung (309) des Datenstroms zu ermöglichen.

17. Kommunikationssystem, welches eine Servervorrichtung und wenigstens eine Clientvorrichtung nach Anspruch 16 umfasst.

18. Computerprogramm, **dadurch gekennzeichnet, dass** es Anweisungen zur Durchführung, durch eine Clientvorrichtung oder eine Servervorrichtung, des Verfahrens nach einem der Ansprüche 1 bis 15, wenn das Programm von einem Prozessor der Clientvorrichtung oder der Servervorrichtung ausgeführt wird, umfasst.

19. Speichermittel, **dadurch gekennzeichnet, dass** sie ein Computerprogramm speichern, welches Anweisungen zur Durchführung, durch eine Clientvorrichtung oder eine Servervorrichtung, des Verfahrens nach einem der Ansprüche 1 bis 15, wenn das Programm von einem Prozessor der Clientvorrichtung oder der Servervorrichtung ausgeführt wird, umfasst.

## Claims

1. Method for transmitting a data stream according to a multipoint transmission mode between a server device (101) and a client device (103, 104, 105), the method being **characterized in that** it comprises the following steps implemented by the client device:
obtaining (301) a first request for subscription to a multipoint group, termed the target multipoint group, making it possible to obtain a data stream;
replacing (304) the first request for subscription to the target multipoint group with a plurality of second subscription requests, each second subscription request being associated with a multipoint sub-group of a set of multipoint sub-groups, each multipoint sub-group making it possible to obtain a data sub-stream forming a sub-part of the data stream, the set of multipoint sub-groups making it possible to obtain the said data stream by combining the data sub-streams;
associating (305) a network interface with each second subscription request, each associated network interface being taken in a set of network interfaces, linking the server device to the client device, which are available on the client device;
transmitting (306) each second subscription request in the direction of the server device on the network interface which has been associated with the said second request;
receiving (307) data sub-streams corresponding to the second subscription requests transmitted, each data sub-stream received being received on the network interface on which the second subscription request associated with the said data sub-stream has been transmitted;
reconstructing (308) the data stream using the data sub-streams received so as to allow a use (309) of the said data stream.

2. Method according to Claim 1, **characterized in that**, subsequent to the obtaining of the first request for subscription to the target multipoint group, the client device searches for (302) an information item representative of the said target multipoint group in a set of information items representative of multipoint groups, the first subscription request being replaced with the second subscription requests when the information item representative of the said target multipoint group is retrieved (303) in the set of information items representative of multipoint groups.

3. Method according to Claim 2, **characterized in that**, during the search for the information item representative of the said target multipoint group in the set of information items representative of multipoint groups, the client device implements the following steps:
dispatching (3021) in the direction of the server device a request, termed GETCAPS request, asking for information items representative of each data stream that is deliverable by the said server device;
receiving (3022) on the part of the server device at least one request, termed SENDCAPS request, providing an information item representative of each data stream that is deliverable by the said server device;
constructing (3023) the set of information items representative of multipoint groups on the basis of the information items representative of received data streams;
searching for (3024) the information item representative of the said target multipoint group in the set thus constructed of information items representative of multipoint groups.

4. Method according to Claim 3, **characterized in that** the information item representative of each data stream comprises an information item representative of a multipoint address (1057) of the said data stream and an information item representative of a set (1059, 1060) of data sub-streams corresponding to the said data stream and, for each data sub-stream, an information item representative of a multipoint address (1060) of the said data sub-stream.

5. Method according to Claim 4, **characterized in that** the information item representative of each data stream furthermore comprises an information item representative of the bitrate of each data stream (1056) and of each data sub-stream (1059).

6. Method according to Claim 3, 4 or 5, **characterized in that** each GETCAPS request and each SENDCAPS request is compatible with an Internet group management protocol (IGMP).

7. Method according to any one of Claims 1 to 6, **characterized in that**, during the reception of the data sub-streams corresponding to the second subscription requests transmitted, the client device verifies (307) that for each second subscription request transmitted, the data sub-stream corresponding to the multipoint sub-group associated with the said second subscription request is received, and reconstructs (308) the said data stream if each data sub-stream is received.

8. Method according to Claim 7, **characterized in that**, when at least one data sub-stream is not received, the client device transmits (310), in the direction of the server device, an unsubscription request in respect of each multipoint sub-group for which a second subscription request has been transmitted.

9. Method according to any one of Claims 2 to 8, **characterized in that**, when the information item representative of the said multipoint group is not retrieved in the set of information items representative of multipoint groups, the client device transmits the first subscription request in the direction of the server device so as to receive the data stream.

10. Method according to any one of the preceding claims, **characterized in that**, when during the reception of the data sub-streams corresponding to the second subscription requests transmitted, the client device detects (501) an opening of a new network interface linking the client device to the server device, the client device implements the following steps:
enriching (502) the said set of network interfaces by adding the new detected network interface thereto;
associating (502) the new network interface with at least one second request for subscription to a multipoint sub-group of the set of multipoint sub-groups corresponding to the target multipoint group;
transmitting (503), in the direction of the server device, each second subscription request associated with the new network interface by using the new network interface;
transmitting, when a data sub-stream, termed the duplicated sub-stream, corresponding to a multipoint sub-group, associated with a second subscription request transmitted on the new network interface, is received simultaneously on a plurality of network interfaces comprising the new network interface, an unsubscription request in respect of each multipoint sub-group corresponding to a duplicated sub-stream received on a network interface other than the new network interface.

11. Method according to Claim 10, **characterized in that**, when a data sub-stream corresponding to a multipoint sub-group, associated with a second subscription request transmitted on the new network interface, is not received on the new network interface, the client device transmits, in the direction of the server device, an unsubscription request in respect of the multipoint sub-group corresponding to the data sub-stream not received.

12. Method according to any one of the preceding claims, **characterized in that**, when, during the reception of the data sub-streams corresponding to the second subscription requests transmitted, the client device detects (601) a deletion of a network interface linking the client device to the server device, the client device implements the following steps:
reducing (602) the said set of network interfaces by removing the deleted network interface;
associating (602) each second subscription request previously associated with the deleted network interface with a network interface of the reduced set of network interfaces;
transmitting (603), in the direction of the server device, each second subscription request previously associated with the deleted network interface by using the network interface of the reduced set of network interfaces with which it is associated;
reconstructing (605) the multipoint stream if, subsequent to the transmission of each second subscription request previously associated with the deleted network interface, each data sub-stream corresponding to each second subscription request transmitted is received.

13. Method according to Claim 12, **characterized in that**, if, subsequent to the transmission of each second subscription request previously associated with the deleted network interface, at least one data sub-stream corresponding to a second subscription request transmitted is not received, the client device transmits (607) in the direction of the server device an unsubscription request in respect of each multipoint sub-group.

14. Method according to any one of the preceding claims, **characterized in that** the method comprises the following steps implemented by the server device:
receiving (701) each second subscription request on a network interface, termed the reception interface;
distributing (702) the data of the data stream in the data sub-streams;
transmitting (703) each data sub-stream on a network interface corresponding to the interface for receiving the second subscription request associated with the multipoint sub-group corresponding to the said data sub-stream.

15. Method according to Claim 14 when it depends on Claim 5, **characterized in that** the distributing of the data of the data stream in the data sub-streams is done while taking into account the information item representative of the bitrate of each data stream and/or of each data sub-stream.

16. Client device (103, 104, 105) able to receive a data stream according to a multipoint transmission mode on the part of a server device (101) comprising the following means:
obtaining means (301) for obtaining a first request for subscription to a multipoint group, termed the target multipoint group, making it possible to obtain a data stream;
replacement means (304) for replacing the first request for subscription to the target multipoint group with a plurality of second subscription requests, each second subscription request being associated with a multipoint sub-group of a set of multipoint sub-groups, each multipoint sub-group making it possible to obtain a data sub-stream forming a sub-part of the data stream, the set of multipoint sub-groups making it possible to obtain the said data stream by combining the data sub-streams;
association means (305) for associating a network interface with each second subscription request, each associated network interface being taken in a set of network interfaces, linking the client device to the server device, which are available on the client device;
transmission means (306) for transmitting each second request for subscription to the server device on the network interface which has been associated with it;
reception means (3070) for receiving data sub-streams corresponding to the second subscription requests transmitted, each data sub-stream received being received on the network interface on which the second subscription request associated with the said data sub-stream has been transmitted;
reconstruction means (308) for reconstructing the data stream using the data sub-streams received so as to allow a use (309) of the said data stream.

17. Communication system comprising a server device and at least one client device according to Claim 16.

18. Computer program, **characterized in that** it comprises instructions for implementing, by a client device or a server device, the method according to any one of Claims 1 to 15, when the said program is executed by a processor of the client device or of the server device.

19. Storage means, **characterized in that** they store a computer program comprising instructions for implementing, by a server device or a client device, the method according to any one of Claims 1 to 15, when the said program is executed by a processor of the said server device or of the said client device.
